# EUROPÄISCHE PATENTSCHRIFT

(11) **EP 3 405 654 B1**
(45) Veröffentlichungstag und Bekanntmachung des Hinweises auf die Patenterteilung: **16.10.2019**
(21) Anmeldenummer: 17718356.3
(22) Anmeldetag: 18.04.2017
(51) Int. Cl.: B64D 27/24, B64D 27/02, F02C 7/32, F01D 13/02, F01D 15/10, F02C 6/02, F02K 1/52

(54) **ANTRIEBSSYSTEM FÜR LUFTFAHRZEUG**
DRIVE SYSTEM FOR AIRCRAFT
SYSTÈME DE PROPULSION POUR AÉRONEF

(30) Priorität: 02.05.2016 DE 102016207517
(43) Veröffentlichungstag der Anmeldung: 28.11.2018
(73) Patentinhaber: Siemens Aktiengesellschaft, 80333 München (DE)
(72) Erfinder: FRANK, Michael, 91080 Uttenreuth (DE); GRUNDMANN, Jörn, 91091 Großenseebach (DE)
(86) Internationale Anmeldenummer: PCT/EP2017/059134
(87) Internationale Veröffentlichungsnummer: WO 2017/190940

(56) Entgegenhaltungen:
- EP-A1- 2 048 329
- WO-A1-2004/022948
- WO-A1-2009/118298
- DE-A1-102014 210 451
- US-A1- 2003 223 892
- US-A1- 2015 291 285

## Beschreibung

Die vorliegende Erfindung betrifft ein Antriebssystem für ein Luftfahrzeug, umfassend einen elektrischen Generator und eine Verbrennungskraftmaschine mit einer Gasexpansionsturbine, wobei der Generator einen mittels einer Rotorwelle drehbar gelagerten Rotor aufweist, wobei ferner die Gasexpansionsturbine mittels einer Turbinenwelle drehbar gelagert ist, und wobei Rotorwelle und Turbinenwelle derart drehmomentübertragend koppelbar angeordnet sind, dass die Verbrennungskraftmaschine mechanische Energie für den Generator liefern kann. Weiterhin betrifft die Erfindung ein Luftfahrzeug mit einem solchen Antriebssystem.

Bekannte Antriebssysteme für kommerzielle Luftfahrzeuge weisen typischerweise Strahltriebwerke oder Mantelstromtriebwerke auf, bei denen in einer vorgelagerten Brennkammer ein Treibstoff zusammen mit aus der Umgebung zugeführter Luft verbrannt wird. Das erzeugte Heißgas tritt bei den Strahltriebwerken als Antriebsstrahl aus einer Düse aus und erzeugt so den Schub zum Antrieb des Luftfahrzeugs. Antriebssysteme für Luftfahrzeuge mit elektrisch angetriebenen Motoren sind derzeit Gegenstand aktueller Entwicklungstätigkeiten. Solche Systeme werden bereits als Prototypen getestet, sind aber für den Antrieb kommerzieller Luftfahrzeuge bisher noch nicht realisiert worden. Besonders interessant für zukünftige Luftfahrzeuge sind hybridelektrische Antriebssysteme, bei denen ein elektrischer Motor mit elektrischer Energie gespeist wird, die an Bord des Luftfahrzeuges mit Hilfe eines Generators aus einem mitgeführten Treibstoff erzeugt wird.

Bei derzeit im Einsatz befindlichen Luftfahrzeugen kommen oft Hilfsaggregate zum Einsatz, die vor Ort elektrische Energie für ein Bordnetz erzeugen können und auch als Auxiliary Power Units bezeichnet werden. Solche Hilfsaggregate weisen typischerweise eine Verbrennungskraftmaschine und einen damit gekoppelten Generator auf. Mit ihnen kann beispielsweise auch dann Strom für das Bordnetz erzeugt werden, wenn die Strahltriebwerke des Luftfahrzeugs gerade nicht laufen. Sie sind aber zur Erzeugung von viel geringerer elektrischer Leistung ausgelegt, als es für einen elektrischen Antrieb des gesamten Luftfahrzeugs erforderlich ist.

Bei den geplanten Luftfahrzeugen, bei denen der Hauptantrieb als hybridelektrischer Antrieb ausgelegt ist, ist die Leistungsdichte des Antriebssystems ein entscheidender Optimierungsfaktor. Dies bedeutet, dass sowohl die Leistungsdichte des Elektromotors als auch die Leistungsdichte des zur Stromerzeugung verwendeten Generators sehr hoch sein muss, damit ein solcher hybridelektrischer Antrieb wirtschaftlich ist. Dabei ist auch die Masse eines zur Kühlung der übrigen Generator-Komponenten vorgesehenen Kühlungssystems in die Gesamtmassebilanz mit einzubeziehen. Gerade bei den hohen benötigten Leistungen eines Generators für ein hybridelektrisch angetriebenes kommerzielles Luftfahrzeug - beispielsweise ein Passagier- oder Frachtflugzeug - ist der apparative Aufwand für die Kühlung des Generators hoch. Für derartige Anwendungen sind beispielsweise Generatoren mit Leistungsdichten von mehr als 20 kW/kg bei einer Leistung von über 5 MW im Gespräch. Selbst bei einer Verlustwärme von nur 1% muss entsprechend eine Wärmeleistung von etwa 100 kW abgeführt werden. Die Verwendung herkömmlicher Kühlvorrichtungen mit Wärmetauschern und/oder Lüftern ist zwar prinzipiell möglich, aber ihre typischerweise relativ große Masse ist nachteilig für den Einsatz des Generators beim elektrischen Fliegen.

Aufgabe der Erfindung ist es daher, ein Antriebssystem für ein Luftfahrzeug anzugeben, welches die genannten Nachteile überwindet. Insbesondere soll ein Antriebssystem zur Verfügung gestellt werden, welches eine effektive Kühlung des zur elektrischen Energieerzeugung verwendeten Generators ermöglicht, wobei gleichzeitig die Masse des Generators, insbesondere der für die Kühlung wirksamen Komponenten, möglichst gering gehalten werden soll. Eine weitere Aufgabe ist es, ein Luftfahrzeug mit solch einem Antriebssystem anzugeben.

Diese Aufgaben werden durch das in Anspruch 1 beschriebene Antriebssystem und das in Anspruch 9 beschriebene Luftfahrzeug gelöst.

Das erfindungsgemäße Antriebssystem für ein Luftfahrzeug weist einen elektrischen Generator und eine Verbrennungskraftmaschine mit einer Gasexpansionsturbine auf. Der Generator weist dabei einen mittels einer Rotorwelle drehbar gelagerten Rotor auf, und die Gasexpansionsturbine ist mittels einer Turbinenwelle drehbar gelagert. Rotorwelle und Turbinenwelle sind derart drehmomentübertragend koppelbar angeordnet, dass die Verbrennungskraftmaschine mechanische Energie für den Generator liefern kann. Zumindest ein Bestandteil des Generators ist wenigstens teilweise in oder an einem Zuluftstrom der Verbrennungskraftmaschine angeordnet.

Das Antriebssystem ist also so ausgelegt, dass die Verbrennungskraftmaschine durch Verbrennung eines Treibstoffs mechanische Energie erzeugen kann, welche über die Kopplung zwischen Turbinenwelle und Rotorwelle auf den Generator übertagen wird und dort in elektrische Energie um gewandelt wird. Hierzu kann die Verbrennungskraftmaschine beispielsweise einen Verdichter, eine Brennkammer und die eigentliche Expansionsturbine umfassen. Die Turbinenwelle und die Generatorwelle können beispielsweise direkt und drehmomentschlüssig miteinander verbunden sein. Sie können aber alternativ auch mittels eines Getriebes und/oder mit einer Kupplung miteinander verbunden sein oder verbindbar angeordnet sein. Wesentlich ist, dass die beiden Wellen so angeordnet sind, dass mechanische Energie von der Turbinenwelle auf die Rotorwelle übertragen werden kann. Durch die Drehung des Rotors wird dann im Generator die Erzeugung elektrischer Energie bewirkt. Hierbei fällt in den einzelnen Bestandteilen des Generators Verlustwärme an, so dass diese Bestandteile des Generators im Betrieb zu kühlen sind. Bei den zu kühlenden Bestandteilen kann es sich insbesondere um den Rotor des Generators und/oder um einen Stator des Generators handeln, alternativ auch nur um spezielle zu kühlende Teile des Rotors und/oder Stators, wie zum Beispiel darauf angeordnete Wicklungen. Alternativ oder zusätzlich liegen aber auch weitere zu kühlende Bestandteile vor, beispielsweise Bestandteile eines Kühlsystems, welches zur Kühlung von Rotor und/oder Stator verwendet wird. Dann ist es nötig, auch solche, gegebenenfalls vom Stator und/oder Rotor entfernt angeordnete Komponenten des Kühlsystems zu kühlen, die ihrerseits an Rotor und/oder Stator (oder Teile davon) thermisch gekoppelt sein können. Wesentlich für die vorliegende Erfindung ist, dass zumindest ein solcher Bestandteil des Generators dem Zuluftstrom der Verbrennungskraftmaschine ausgesetzt ist, um eine effiziente Kühlung zu ermöglichen. Hierzu ist zumindest ein solcher Bestandteil in oder an diesem Zuluftstrom angeordnet. Unter einer Anordnung "im Zuluftstrom" soll im vorliegenden Zusammenhang verstanden werden, dass der genannte Bestandteil von der einströmenden Luft auf mehreren Seiten umströmt wird. Dagegen soll unter einer Anordnung "am Zuluftstrom" verstanden werden, dass zumindest eine Oberfläche des betreffenden Bestandteils dem Zuluftstrom ausgesetzt ist, mit anderen Worten also im Strömungsbereich des Zuluftstroms angeordnet ist. Die Anordnung "am Zuluftstrom" schließt also nach dieser Definition die spezielle Anordnung "im Zuluftstrom" mit ein.

Ein wesentlicher Vorteil des erfindungsgemäßen Antriebssystems liegt also darin, dass ein für den Betrieb der Verbrennungskraftmaschine ohnehin benötigter Zuluftstrom gleichzeitig für die Kühlung des Generators mit verwendet wird. Hierdurch kann die Masse des Generators und seiner Hilfsbetriebe im Vergleich zu einer herkömmlichen Kühlung reduziert werden, denn es kann entweder vollständig auf eine eigene Kühlvorrichtung verzichtet werden, oder der Generator kann eine Kühlvorrichtung aufweisen, welche aber im Vergleich zu einer Anordnung außerhalb des Zuluftstroms mit einem geringeren Gewicht ausgeführt werden kann, da die Kühlung durch den Zuluftstrom unterstützt wird. Die Nutzung des Zuluftstroms für die Verbrennungskraftmaschine zur Kühlung des Generators stellt einen erheblichen Synergieeffekt dar, mit dem ein bedeutender Teil der Masse des Generators eingespart werden kann, denn zum einen wird für den Betrieb der Verbrennungskraftmaschine ohnehin ein sehr starker Zuluftstrom benötigt, der auch eine große Kühlwirkung entfalten kann, und zum anderen kann ein herkömmliches Generator-Kühlsystem einen erheblichen Teil der Masse des Generators ausmachen. Der Generator kann insbesondere allgemein ohne ein Kühlluft-Gebläse ausgestaltet werden, was eine erhebliche Massenersparnis darstellt.

Prinzipiell könnte der zu kühlende Bestandteil des Generators alternativ zur Erfindung auch an einer anderen Stelle, z.B. an einer Stelle auf der Außenseite des Luftfahrzeugs angeordnet werden, der beim Fliegen von der umgebenden Luft angeströmt wird, wobei die Luft von dort aber nicht in die Gasexpansionsturbine eingeleitet wird. Eine solche Anordnung ist beispielsweise für den Elektromotor sehr vorteilhaft, da der Motor vor allem während des Flugs Verlustwärme erzeugt und dann auch an einer solchen alternativen Stelle ein starker Luftstrom zur Verfügung steht. Für den Generator ist eine solche Platzierung aber weniger vorteilhat als die Platzierung gemäß der vorliegenden Erfindung, denn von dem Generator kann auch im Stand oder bei langsamen Bewegungen des Luftfahrzeugs eine hohe elektrische Leistung gefordert werden. Wenn das Luftfahrzeug nicht fliegt, werden aber solch außenliegenden Stellen nicht stark von Luft angeströmt. Gerade für solche Betriebszustände ist die Anordnung gemäß der vorliegenden Erfindung besonders vorteilhaft, da die hohe elektrische Leistung im Generator auch immer mit einem starken Zuluftstrom zur Verbrennungskraftmaschine verbunden ist, weil die Verbrennungskraftmaschine ja die mechanische Energie für den Generator zur Verfügung stellt. Wenn die Verbrennungskraftmaschine in Betrieb ist, wird also auch immer eine starke Strömung in ihrem Zuluftstrom zur Verfügung stehen, die zusätzlich zu ihrer Hauptfunktion - der Luftzufuhr in die Gasexpansionsturbine - für die Kühlung des Generators genutzt werden kann. Immer dann, wenn eine starke Strömung zur Verfügung steht, ist auch der Bedarf für die Kühlung des Generators besonders groß, denn die Leistung der Verbrennungskraftmaschine steigt und fällt mit der des Generators, bedingt durch die Kopplung von Turbinenwelle und Rotorwelle. Dies ist unabhängig vom Flugzustand des Luftfahrzeugs der Fall.

Der Zuluftstrom für die Verbrennungskraftmaschine kann beispielsweise als Ansaugluftstrom mittels einer Ansaugvorrichtung erzeugt werden beziehungsweise erzeugbar sein. Beispielsweise kann ein solches Ansaugelement zur Zuführung von Luftmengen von wenigstens 20 m³/s in die Gasexpansionsturbine ausgelegt sein. Das Ansaugelement kann Teil der Verbrennungskraftmaschine sein, beispielsweise kann die Ansaugwirkung durch einen Verdichter der Verbrennungskraftmaschine erzeugt werden. Ein derart starker Luftstrom, wie er durch ein solches Ansaugelement erzeugbar ist, kann besonders vorteilhaft zu Kühlung des Generators mitbenutzt werden. Durch diese Verwendung der Ansaugluft zur Kühlung wird die Luft vor dem Eintreten in die Gasexpansionsturbine leicht vorgewärmt. Diese Erwärmung ist jedoch aufgrund der großen einströmenden Luftmengen relativ gering und hat daher keinen wesentlichen Einfluss auf den Wirkungsgrad der Verbrennungskraftmaschine.

Durch die Ausnutzung des Zuluftstroms der Gasturbine für die Kühlung des Generators wird die Notwendigkeit zusätzlicher Gebläse vermieden. Herkömmliche Luftkühlungen von Generatoren verwenden schwere Gebläse, um die nötigen Luftströmungen zu erzeugen. Die Masse dieser Gebläse kann durch die hier vorgeschlagene Anordnung eingespart werden.

Das erfindungsgemäße Luftfahrzeug umfasst ein Antriebssystem nach einem der vorhergehenden Ansprüche. Die Vorteile dieses Luftfahrzeugs sind analog zu den bereits beschriebenen Vorteilen des Antriebssystems.

Vorteilhafte Ausgestaltungen und Weiterbildungen der Erfindung gehen aus den von den Ansprüchen 1 und 12 abhängigen Ansprüchen sowie der folgenden Beschreibung hervor. Dabei können die beschriebenen Ausgestaltungen des Antriebssystems und des Luftfahrzeugs vorteilhaft miteinander kombiniert werden.

So kann das Antriebssystem zusätzlich einen elektrischen Motor umfassen, welcher durch den elektrischen Generator mit elektrischer Energie versorgt werden kann, wobei der Motor zum Antrieb des Luftfahrzeugs ausgelegt ist. Mit anderen Worten ist der elektrische Generator dann nicht nur als Hilfsaggregat dimensioniert, sondern Generator und Motor sind so ausgelegt, dass die - gegebenenfalls im Zusammenspiel mit einem oder mehreren weiteren derartigen Generatoren und/oder Motoren, die ebenfalls Teil des Antriebssystems sein können - das Luftfahrzeugt antreiben können. Das Antriebssystem kann also als Hauptantrieb für das Luftfahrzeug ausgelegt sein.

Der Generator des Antriebssystems kann vorteilhaft für eine Nennleistung von wenigstens 1 Megawatt (MW), besonders vorteilhaft wenigstens 10 MW, ausgelegt sein. Ein für derartige Leistungen ausgelegter Generator eignet sich zur Stromerzeugung für einen Hauptantrieb eines kommerziellen Luftfahrzeugs, beispielsweise für den Passagier- und/oder Frachttransport. Zweckmäßig ist dann die Verbrennungskraftmaschine zu Erzeugung von mechanischer Energie von wenigsten denselben genannten Leistungsbereichen ausgelegt. Bei einer solchen Dimensionierung der Verbrennungskraftmaschine sind die erforderlichen anzusaugenden Luftmengen entsprechend hoch, so dass für die Kühlung des Generators auch ein hoher Luftmassenstrom zur Verfügung steht. Beispielsweise benötigt eine Verbrennungskraftmaschine mit einer Nennleistung von 10 MW und einem Wirkungsgrad von 60% bei stöchiometrischer Verbrennung einen Luftstrom von etwa 4,4 m³/s. Bei einem Luftüberschuss ergeben sich entsprechend höhere Luftströme, so dass die insgesamt einzuströmende Luftmenge im Bereich oberhalb von 20 m3/s, beispielsweise zwischen 20 m³/s und 30 m³/s liegen kann. Ein solcher Luftstrom ermöglicht eine hohe Kühlwirkung für den Generator, ohne dass sich eine für den Betrieb der Verbrennungskraftmaschine störende Erwärmung der angesaugten Luft ergibt.

Der in Anspruch 1 genannte, wenigstens teilweise im oder am Zuluftstrom angeordnete Bestandteil des Generators kann insbesondere der Rotor und/oder ein Stator des Generators sein. In diesen Komponenten des Generators fällt besonders viel Verlustwärme an, so dass eine Anordnung im Strömungsbereich des Zuluftstroms für sie besonders vorteilhaft ist, um eine effektive Wärmeabfuhr zu erreichen. Bei dieser Ausführungsform kann beispielsweise eine übergeordnete Anordnung aus ineinander geschachteltem Rotor und Stator so im Zuluftstrom angeordnet sein, dass die gesamte Anordnung von der Zuluft umströmt wird. Bei einer Innenrotorgeometrie des Generators wird dann hauptsächlich die Außenfläche des Stators von der Zuluft umströmt, dagegen wird bei einer Außenrotorgeometrie hauptsächlich die Außenfläche des Rotors von der Zuluft umströmt. Alternativ zu den beschriebenen Anordnungen, bei denen Stator und/oder Rotor innerhalb des Strömungspfades angeordnet sind, können die genannten Teile aber auch so angeordnet sein, dass sie dem Strömungspfad nur benachbart sind, wobei zumindest eine Oberfläche eines der genannten Bestandteile im Strömungsbereich der Zuluft liegt.

Besonders vorteilhaft können Rotor und/oder Stator des Generators zumindest teilweise in oder an einem Hauptpfad des Zuluftstroms der Verbrennungskraftmaschine angeordnet sein. Unter einem solchen Hauptpfad soll bei einer Unterteilung des Zuluftstroms in mehrere Pfade derjenige Pfad mit dem größten Luftmassenstrom verstanden werden. Bei diesem Hauptpfad kann es sich beispielsweise um einen außerhalb des Luftfahrzeugs liegenden Strömungsbereich handeln, in dem eine Sogwirkung zur Gasexpansionsturbine vorliegt, so dass die Luft von diesem Bereich in die Gasexpansionsturbine hinein angesaugt wird. Alternativ kann es sich aber insbesondere auch um einen im Luftfahrzeug angeordneten innenliegenden Kanal handeln, der zur Führung der Zuluft in die Gasexpansionsturbine ausgestaltet ist. In einem solchen innenliegenden Kanal wird beim Ansaugen der Zuluft ein besonders starker Luftstrom erzeugt, der vorteilhat zur effektiven Kühlung des Generators genutzt werden kann.

Vorteilhaft kann der Zuluftstrom der Verbrennungskraftmaschine in mehrere parallele Teilpfade aufgeteilt sein. Prinzipiell können dabei ein oder mehrere Teilpfade so angeordnet sein, dass die in ihnen geführte Luft an einer oder mehreren Oberflächen von wenigstens einem zu kühlenden Bestandteil des Generators entlang strömt.

Bei dieser Ausführungsform können Rotor und/oder Stator zumindest teilweise in oder an einem dieser Teilpfade angeordnet ist. Es ist dann insbesondere möglich, dass die zu kühlenden Oberflächen des Rotors und/oder Stators nicht dem maximalen Luftmassenstrom des Hauptpfades ausgesetzt sind, sondern sie können auch einen Nebenpfad mit geringerem Luftmassenstrom gekühlt werden. Dies kann beispielsweise vorteilhaft sein, um mechanische Strömungsverluste durch die Anströmung der zu kühlenden Oberfläche(n) zu reduzieren.

Bei einer Ausführungsform mit mehreren parallelen Teilpfaden können diese vorteilhaft als getrennte Luftkanäle mit getrennt regelbaren Luftströmen ausgebildet sein. Zur Regelung der einzelnen Luftströme können insbesondere Ventile oder Klappen in den einzelnen Teilpfaden angeordnet sein. Diese können in Strömungsrichtung vor und/oder nach der oder den zu kühlenden Oberfläche(n) des Generators angeordnet sein. Eine solche Regelung der Luftströme ermöglicht eine besonders vorteilhaft Anpassung der Strömungen an die zum jeweiligen Zeitpunkt benötigte Kühlleistung und den jeweils benötigten Luftstrom in die Gasexpansionsturbine.

Der Generator kann vorteilhat im Wesentlichen durch Luft gekühlt sein. Insbesondere kann ein solcher hauptsächlich luftgekühlter Generator ohne eine Kühlflüssigkeit und ohne einen zugehörigen geschlossenen Kühlmittelkreislauf ausgestaltet sein. Im Gegensatz zur herkömmlichen wasser- oder ölgekühlten Generatoren kann ein solcher im Wesentlichen luftgekühlter Generator mit einem geringeren Gewicht ausgeführt werden, was gerade bei der Anwendung im Luftfahrtbereich vorteilhaft ist. Beispielsweise kann der Generator dann ohne Wärmetauscher und insbesondere ohne Pumpen ausgeführt werden. Eine effektive Kühlung kann bei dieser Ausführungsform durch die Anordnung wenigstens einer zu kühlenden Oberfläche insbesondere in einem starken Bereich des Zuluftstroms erreicht werden.

Alternativ zu der beschriebenen luftgekühlten Variante kann der Generator aber auch eine Kühlvorrichtung aufweisen, die zur Kühlung des Generators mit einem fluiden Kühlmittel ausgelegt ist, wobei die Kühlvorrichtung einen Kühlkreislauf zum Zirkulieren des Kühlmittels aufweist und zumindest ein Teilbereich dieses Kühlkreislaufs in oder an einem Teilpfad des Zuluftstroms der Verbrennungskraftmaschine angeordnet ist. Mit anderen Worten ist dann der Kühlmechanismus in zwei Stufen unterteilt: Beispielsweise kann Rotor und/oder Stator in einer ersten Stufe durch das Kühlmittel gekühlt werden, und in einer zweiten Stufe kann das fluide Kühlmittel die so aufgenommene Wärme wiederum an die Zuluft der Gasexpansionsturbine abgeben. Im Vergleich zu einem herkömmlichen Kühlsystem eines Generators mit weniger günstiger Luftanströmung kann das Kühlsystem bei dieser Variante leichter und auch platzsparender ausgeführt werden, da die Wärme des Generators insgesamt effektiver an die Umgebung abgegeben werden kann. Beispielsweise kann das Kühlsystem für ein geringeres Volumen an Kühlfluid ausgelegt werden, wobei prinzipiell sowohl Masse für das Kühlfluid als auch für das umgebende Material eingespart werden kann. Um dies zu erreichen kann beispielsweise der Transportweg für das zirkulierende Kühlmittel verkürzt werden und/oder der Querschnittsfläche des wenigstens einen Kühlmittelkanals kann im Vergleich zu herkömmlichen Kühlvorrichtungen für Generatoren ohne die vorteilhafte Luftanströmung reduziert werden. Bei dem Kühlmittel kann es sich beispielsweise um Öl oder Wasser handeln. Zur Erreichung von kryogenen Temperaturen, beispielsweise wenn Rotor und/oder Statur mit supraleitenden Wicklungen versehen sind, können auch kryogene Kühlflüssigkeiten wie flüssiger Stickstoff, flüssiger Wasserstoff, flüssiges Neon oder flüssiges Helium zum Einsatz kommen. Die Abführung der Wärme an die Umgebungsluft kann dann in einem mehrstufigen Kühlprozess erfolgen.

Bei einer Ausführungsform mit Kühlmittelkreislauf kann der Generator besonders vorteilhaft einen Wärmeübertrager aufweisen, wobei dann das im Kühlkreislauf bewegte Kühlmittel den ersten Stoffstrom des Wärmeübertragers darstellt und ein Anteil der Zuluft der Verbrennungskraftmaschine den zweiten Stoffstrom des Wärmeübertragers darstellt. Bei dieser Ausführungsform kann über die vorab beschriebene zweite Stufe der Kühlvorrichtung besonders effektive Wärme vom Kühlmittel an die Anströmluft abgegeben werden. Aufgrund der starken Luftströmung auf der kalten Seite des Wärmeübertragers kann dieser mit einem geringeren Materialeinsatz ausgeführt werden und somit leichter sein als bei vergleichbaren Kühlsystemen ohne die günstige Anströmung gemäß der vorliegenden Erfindung.

Insbesondere kann bei einem solchen Kühlsystem der Kühlkreislauf dazu ausgelegt sein, Kühlmittel nach dem Prinzip eines Wärmerohres und/oder Thermosiphons zu zirkulieren. Mit anderen Worten kann der Kühlkreislauf einen Verdampferbereich aufweisen, bei dem Wärme von einem zu kühlenden Bestandteil des Generators auf das Kühlmittel übertragen wird und das Kühlmittel von der flüssigen Phase in die Gasphase übergeht. Außerdem kann der Kühlkreislauf einen Kondensorbereich aufweisen, in dem gasförmiges Kühlmittel in die flüssige Phase übergeht, wobei der Kondensorbereich thermisch an die von der Zuluft angeströmte Oberfläche gekoppelt ist, so dass Wärme vom Kondensorbereich an die Zuluft der Gasexpansionsturbine abgegeben werden kann. Wenn der Fluss des flüssigen Kühlmittels in diesem Prozess von der Schwerkraft unterstützt wird, handelt es sich um einen Thermosiphon, ansonsten um ein Wärmerohr.

Bei dem erfindungsgemäßen Luftfahrzeug können die Verbrennungskraftmaschine und der Generator im Rumpf des Luftfahrzeugs angeordnet sein. Dies kann vorteilhaft sein, weil im Rumpf des Luftfahrzeugs im Vergleich zu den Tragflächen mehr Platz zur Verfügung steht und der Strömungswiderstand des Luftfahrzeugs durch die hier innen angeordneten Komponenten nicht beeinträchtigt wird. Weiterhin ist eine Unterbringung auf oder nahe der Längsachse von Vorteil, um das Luftfahrzeug auszubalancieren, insbesondere wenn eine ungeradzahlige Anzahl von Generatoren verwendet wird. Weiterhin sind die mechanischen Lasten auf den Generator bei Flugmanövern vergleichsweise gering. Vorteilhaft ist dann der wenigstens eine Pfad des Zuluftstroms als im Rumpf des Luftfahrzeugs innenliegender Luftkanal ausgebildet. Beispielsweise kann ein seitlich am Rumpf angeordneter Lufteinlass als Eingang eines solchen Kanals dienen. Alternativ kann ein solcher Lufteinlass aber auch auf einer Ober- oder Unterseite des Rumpfs angeordnet sein.

Die Verbrennungskraftmaschine und der Generator können alternativ zu der vorgenannten Ausführungsform in und/oder an einer vom Rumpf oder einer Tragfläche hervorragenden Gondel des Luftfahrzeugs angeordnet sind. Ein Vorteil ist, dass der Platzbedarf nicht zu Lasten des im Innenraum beispielsweise für Fracht und Passagiere vorgesehenen Platzes geht. In einer solchen Gondel ist weiterhin der vorhandene Fahrluftstrom vergleichsweise hoch. Bei dieser Variante kann dann der der wenigstens eine Pfad des Zuluftstroms beispielsweise als ein in der Gondel geführter Luftkanal ausgebildet sein. Besonders vorteilhaft kann der Lufteinlass hierbei in einem in Flugrichtung vorderen Bereich der Gondel angeordnet sein. Vor allem bei dieser Ausführungsform muss es sich bei dem wenigstens einen Zuluftpfad auch nicht um einen geschlossenen Kanal handeln, sondern es kann sich auch um einen außenliegenden Ansaugbereich im in Flugrichtung vorderen Bereich der Gondel handeln.

Alternativ können die Verbrennungskraftmaschine und der Generator in und/oder an einer Tragfläche des Luftfahrzeugs angeordnet sein. Die Vorteile sind ähnlich wie oben im Zusammenhang mit der Anordnung in einer Gondel beschrieben. Außerdem ist diese Anordnung und die Anordnung in Gondeln ähnlich wie bei der Anordnung von herkömmlichen Triebwerken nach dem Stand der Technik. Daher sind die Änderungen des Gesamtkonzeptes für den Bau des Luftfahrzeuges vergleichsweise gering. Diese Ausführungsform ist besonders dann vorteilhaft, wenn zumindest ein Paar von derartigen Systemen aus Verbrennungskraftmaschine und Generator vorliegt, die symmetrisch auf die wenigstens zwei Tragflächen eines Luftfahrzeugs verteilt sein können. Auch bei dieser Ausführungsform kann es sich bei dem Zuluftpfad entweder um einen innenliegenden Kanal oder aber um einen außenliegenden Ansaugbereich im vorderen Bereich der jeweiligen Tragfläche handeln.

Nachfolgend wird die Erfindung anhand einiger bevorzugter Ausführungsbeispiele unter Bezugnahme auf die angehängten Zeichnungen beschrieben, in denen:
- Figur 1: eine schematische Darstellung eines Luftfahrzeugs nach einem ersten Ausführungsbeispiel zeigt,
- Figur 2: eine schematische Darstellung von Teilen des Antriebssystems im ersten Ausführungsbeispiel zeigt,
- Figur 3: eine schematische Darstellung von Teilen eines Antriebssystems nach einem zweiten Ausführungsbeispiel zeigt und
- Figur 4: eine schematische Darstellung von Teilen eines Antriebssystems nach einem dritten Ausführungsbeispiel zeigt.

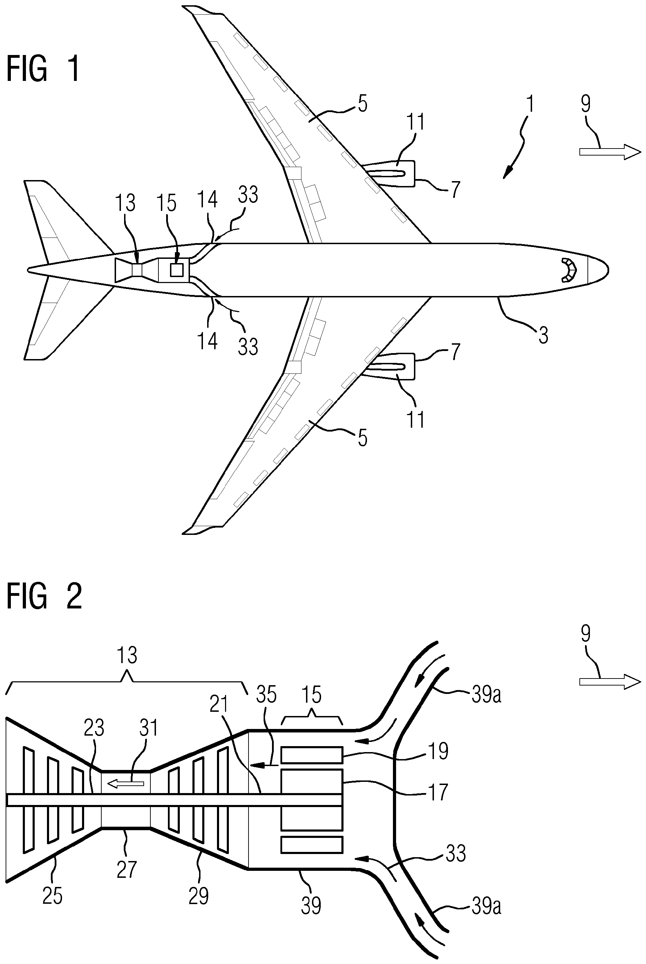

In Figur 1 ist eine schematische Aufsicht eines Luftfahrzeugs 1 nach einem ersten Ausführungsbeispiel der Erfindung gezeigt. Das Luftfahrzeug 1 weist einen Rumpf 3 und zwei Tragflächen 5 mit jeweils an den Tragflächen 5 angeordneten Gondeln 7 auf. Innerhalb der beiden Gondeln sind zwei hier nicht näher dargestellte Elektromotoren 11 angeordnet, die zusammen den Antrieb des Luftfahrzeugs bewirken. Prinzipiell ist aber auch der Antrieb mit nur einem Elektromotor möglich, der auch an anderer Stelle am Luftfahrzeug angeordnet sein kann. Ebenso können auch mehr als zwei derartige Gondeln den Antrieb bewirken.

Der elektrische Strom für die Elektromotoren 11 wird mittels eines Generators 15 erzeugt, wobei die mechanische Energie für den Generator 15 durch eine Verbrennungskraftmaschine 13 geliefert wird. Verbrennungskraftmaschine 13 und Generator 15 sind beide in diesem Beispiel im Rumpf 3 des Luftfahrzeugs 1 angeordnet. Die für die Verbrennungskraftmaschine 13 benötige Luft wird dabei durch zwei Eintrittsöffnungen 14 im Seitenbereich des Rumpfs 3 zugeführt. Die Flugrichtung des Luftfahrzeugs ist hier mit 9 gekennzeichnet, die Luft strömt also insgesamt von einem vorderen Bereich des Luftfahrzeugs zu einem hinteren Bereich des Luftfahrzeugs (also in der Abbildung von rechts nach links). Der Zuluftstrom von außen in dem Rumpf ist hier im Bereich der Eintrittsöffnungen 14 jeweils mit 33 gekennzeichnet.

In Fig. 2 ist eine schematische Detailansicht von Teilen des Antriebssystems des ersten Ausführungsbeispiels der Fig. 1 gezeigt. Gezeigt ist die Verbrennungskraftmaschine 13, die hier einen Verdichter 29, eine Verbrennungskammer 27 und eine Gasexpansionsturbine 25 aufweist. Durch den Verdichter 29 wird Luft in die Verbrennungskraftmaschine 13 angesaugt und komprimiert und danach in der Verbrennungskammer 27 zusammen mit dem eingesetzten und der Luft zugemischten Treibstoff verbrannt. Das entstehende heiße Gas wird in der Gasexpansionsturbine 25 expandiert und treibt hier über die nur schematisch angedeuteten Turbinenschaufeln die Turbinenwelle 23 an. Diese ist zur Übertragung von mechanischer Energie an die Rotorwelle 21 des in Strömungsrichtung vorgelagerten (also im weiter vorne liegenden Bereich des Luftfahrzeugs 1 angeordneten) Generators 15 gekoppelt. Der Generator 15 umfasst einen Rotor 17 und einen Stator 19, wobei der Rotor 17 im gezeigten Beispiel innerhalb des Stators mittels der Rotorwelle 21 drehbar gelagert ist. Um einen besonders leichten Generator 15 für den Einsatz im Luftfahrzeug 1 zu erhalten können Rotor 17 und/oder Stator 19 vorteilhaft mit einer oder mehreren supraleitenden Wicklungen versehen sein. Es können aber auch normalleitende Wicklungen zum Einsatz kommen. Wesentlich für die Funktion ist nur, dass der Generator zur Umwandlung von über die Rotorwelle 21 eingespeister mechanischer Energie in elektrische Energie geeignet ist. Die elektrische Energie kann dann über ein hier nicht näher gezeigtes Kabel vom Generator 15 zu den Motoren 11 des Luftfahrzeugs 1 geleitet werden.

Im Ausführungsbeispiel der Fig. 2 treffen die beiden von den Eintrittsöffnungen 14 der Fig. 1 eingeleiteten Zuluftströme 33 in einer zentralen Kammer, in der die beiden Luftkanäle 39a zusammenkommen, zu einem gemeinsamen Hauptpfad 35 der Zuluft zusammen. Von hier aus wird die Luft durch den Verdichter entlang des Zuluftstroms 31 durch die Brennkammer in die Gasexpansionsturbine geleitet. In diesem Beispiel ist der Generator 15 innerhalb des Hauptpfades 35 dieses Zuluftstroms angeordnet, so dass der Generator von der Zuluft umströmt wird. Hierbei wird im gezeigten Beispiel vor allem der außenliegende Stator 19 von viel Luft umströmt und daher effektiv gekühlt. Es kann jedoch auch der innenliegende Rotor 17 durch die anströmende Zuluft gekühlt werden. Im Unterschied zu herkömmlichen Antriebssystemen ist also der Generator in Luftströmungsrichtung vor der Gasexpansionsturbine angeordnet, was die erfindungsgemäße Verbesserung der Kühlung ermöglicht.

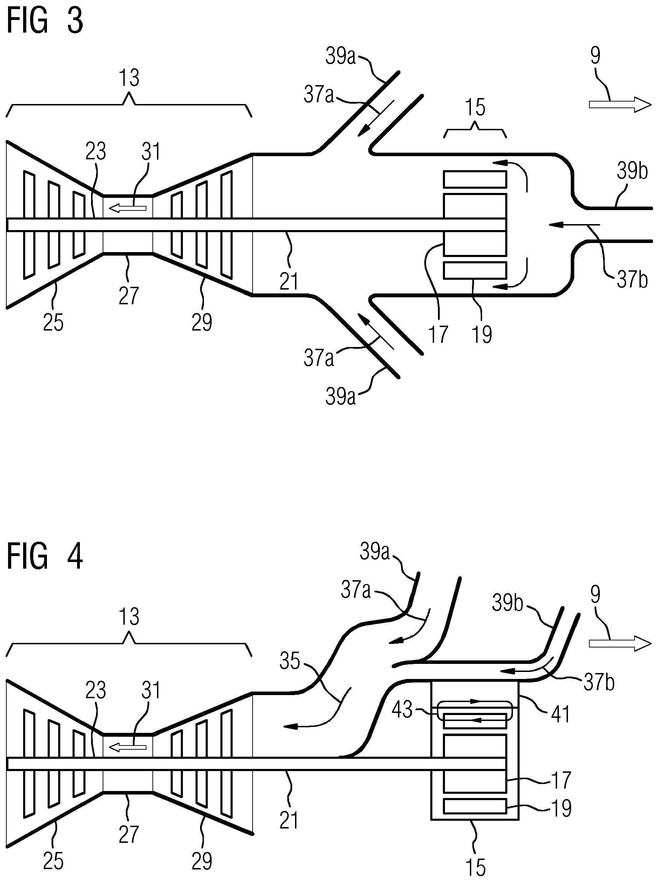

In Fig. 3 ist eine schematische Detailansicht von Teilen des Antriebssystems nach einem zweiten Ausführungsbeispiel der Erfindung gezeigt. Diese Teile des Antriebssystems können ähnlich wie beim ersten Ausführungsbeispiel, also ähnlich wie in Fig. 1 gezeigt, in den Rumpf 3 des Luftfahrzeugs integriert sein. Gezeigt sind wiederum eine Verbrennungskraftmaschine 13 und ein Generator 15, wobei deren einzelne Komponenten ähnlich wie beim ersten Ausführungsbeispiel angeordnet sind und mit denselben Bezugszeichen versehen sind. Im Unterschied zum ersten Ausführungsbeispiel ist hier jedoch der Zuluftstrom auch noch kurz vor dem Verdichter 29 in mehrere Teilpfade 37a und 37b unterteilt, wobei der Generator 15 nur im mittleren Teilpfad 39b angeordnet ist - also in einem Bereich, der einem Zusammentreffen der einzelnen Teilpfade vor deren gemeinsamer Einspeisung in den Verdichter 29 vorgelagert ist. Der Generator 15 wird also auch bei diesem Beispiel von Teilen der Zuluft umströmt. Allerdings ist er nicht dem vollen Luftstrom ausgesetzt, sondern nur dem Teilstrom im mittleren Luftkanal 39b. Die äußeren Luftkanäle 39a können aber einen großen Anteil des gesamten Luftstroms transportieren, wobei die verschiedenen Anteile insbesondere durch hier nicht gezeigte Ventile und/oder Klappen regelbar sein können. So kann der Luftstrom im Teilkanal 39b gezielt eingestellt werden und an die vom Generator 15 benötigte Kühlleistung angepasst werden. Insbesondere können die Luftströme in den einzelnen Teilkanälen 39a und 39b an die jeweilige Leistung des Generators 15 angepasst werden.

In Fig. 4 ist eine schematische Detailansicht von Teilen des Antriebssystems nach einem dritten Ausführungsbeispiel der Erfindung gezeigt. Diese Teile des Antriebssystems können ähnlich wie beim ersten Ausführungsbeispiel, also ähnlich wie in Fig. 1 gezeigt, in den Rumpf 3 des Luftfahrzeugs integriert sein. Prinzipiell können die Verbrennungskraftmaschine 13 und der Generator 15 aber auch in anderen Bereichen des Luftfahrzeugs 1 angeordnet sein, beispielsweise im Bereich der Tragflächen oder an oder in einer Gondel am Rumpf oder an einer Tragfläche. Dabei können gegebenenfalls auch mehrere derartiger Verbrennungskraftmaschinen und Generatoren zum Einsatz kommen. Die verschiedenen Anordnungen der Kombination von Verbrennungskraftmaschine und Generator in verschiedenen Bereichen des Luftfahrzeugs können dabei vorteilhaft mit den verschiedenen Ausgestaltungen der Art der Anströmung der Bestandteile des Generators kombiniert werden.

Im Unterschied zu den beiden vorangegangenen Ausführungsbeispielen sind im Beispiel der Fig. 4 der Rotor 19 und Stator 17 des Generators 15 nicht direkt im Strömungsbereich des Zuluftstroms angeordnet, sondern der Generator weist einen Kühlmittelkreislauf 43 und einen Wärmetauscher 41 auf, wobei der Wärmetauscher dazu ausgebildet ist, einen Wärmeübertrag von dem im Kühlmittelkreislauf 43 zirkulierenden Kühlmittel an die anströmende Luft im Teilpfad 37b zu bewirken. Dazu ist zumindest eine Oberfläche des Wärmetauschers 41 in einem Strömungsbereich des Teilpfades 37b der Zuluft angeordnet. Der Kühlmittelkreislauf 43 ist hier nur durch einen ringförmig geschlossenen Pfeil schematisch angedeutet. Dieser Pfeil führt hier durch den Stator 19, was eine Zirkulation des Kühlmittels durch dieses Bauteil andeutet. Alternativ oder zusätzlich kann ein solches - flüssiges oder gasförmiges - Kühlmittel aber auch durch den Rotor zirkulieren und diesen kühlen. Hierzu kann beispielsweise am in Fig. 4 rechts gezeigten Wellenende der Rotorwelle 21 fluides Kühlmittel ein- und auch wieder ausgeleitet werden. Unabhängig von der genauen Ausgestaltung des Kühlmittelkreislaufs 43 ist die wesentliche Funktion die, über das fluide Kühlmittel die im Betrieb des Generators 15 erwärmten Komponenten zu kühlen und die so abgeführte Wärme über den Wärmetauscher 41 an die vorbeiströmende Luft des Luftkanals 39b abzugeben.

Im Beispiel der Fig. 4 ist die Zuluft wiederum in zwei Teilkanäle 39a und 39b aufgeteilt, wobei im unteren Teil der Figur beispielsweise noch weitere, hier nicht dargestellte Teilkanäle hinzukommen können. Prinzipiell kann aber die indirekte Kühlung des Generators 15 über den Wärmetauscher auch in einem unverzweigten Hauptkanal der Zuluft erfolgen oder in einem Bereich des Kanals, in dem bereits mehrere Teilkanäle zu einem Hauptkanal gemündet sind, ähnlich wie dies für die direkte Kühlung in Fig. 2 gezeigt ist. Bei dem in Fig. 4 gezeigten Beispiel mit mehreren Teilkanälen 39a und 39b und mehreren Teilpfaden 37a und 37b der Zuluft kann wiederum zweckmäßig der Anteil der Zuluft in den einzelnen Teilkanälen so dosiert werden, dass die Kühlwirkung an die Menge der abzuführenden Wärme angepasst ist und gleichzeitig die Strömungsverluste vorteilhaft gering gehalten werden können.

## Patentansprüche

1. Antriebssystem für ein Luftfahrzeug (1), umfassend
- einen elektrischen Generator (15),
- eine Verbrennungskraftmaschine (13) mit einer Gasexpansionsturbine (25),
- wobei der Generator (15) einen mittels einer Rotorwelle (21) drehbar gelagerten Rotor (17) aufweist,
- wobei die Gasexpansionsturbine (25) mittels einer Turbinenwelle (23) drehbar gelagert ist,
- wobei Rotorwelle (21) und Turbinenwelle (23) derart drehmomentübertragend koppelbar angeordnet sind, dass die Verbrennungskraftmaschine (13) mechanische Energie für den Generator (15) liefern kann,
- wobei zumindest ein Bestandteil (17, 19) des Generators (15) wenigstens teilweise in oder an einem Zuluftstrom (33) der Verbrennungskraftmaschine (13) angeordnet ist, **dadurch gekennzeichnet, dass** das Bestandteil (17, 19) der Rotor (17) und/oder ein Stator (19) des elektrischen Generators (15) ist,
- und der Zuluftstrom (33) der Verbrennungskraftmaschine (13) in mehrere Teilpfade (37) aufgeteilt ist und der Rotor (17) und/oder Stator (19) zumindest teilweise in oder an einem dieser Teilpfade (35a) angeordnet ist,
- und die Teilpfade (37) des Zuluftstroms (33) als getrennte Luftkanäle (39) mit getrennt regelbaren Luftströmen (33) ausgebildet sind.

2. Antriebssystem nach Anspruch 1, welches zusätzlich einen elektrischen Motor (11) umfasst, welcher durch den elektrischen Generator (15) mit elektrischer Energie versorgt werden kann, wobei der Motor (11) zum Antrieb des Luftfahrzeugs (1) ausgelegt ist.

3. Antriebssystem nach einem der Ansprüche 1 oder 2, bei dem der Generator (15) für eine Nennleistung von wenigstens 1 Megawatt ausgelegt ist.

4. Antriebssystem nach einem der vorangehenden Ansprüche, bei welchem der Rotor (17) und/oder Stator (19) zumindest teilweise in oder an einem Hauptpfad (35) des Zuluftstroms (31) der Verbrennungskraftmaschine (13) angeordnet ist.

5. Antriebssystem nach einem der vorhergehenden Ansprüche, bei welchem der Generator (15) im Wesentlichen durch Luft gekühlt ist.

6. Antriebssystem nach einem der Ansprüche 1 bis 4, bei welchem der Generator (15) eine Kühlvorrichtung aufweist, die zur Kühlung des Generators (15) mit einem fluiden Kühlmittel ausgelegt ist, wobei die Kühlvorrichtung einen Kühlkreislauf (43) zum Zirkulieren des Kühlmittels aufweist und zumindest ein Teilbereich dieses Kühlkreislaufs in oder an einem Teilpfad (37) des Zuluftstroms der Verbrennungskraftmaschine angeordnet ist.

7. Antriebssystem nach Anspruch 6, bei welchem der Generator (15) einen Wärmeübertrager (41) aufweist, bei welchem das im Kühlkreislauf bewegte Kühlmittel den ersten Stoffstrom des Wärmeübertragers darstellt und ein Anteil der Zuluft der Verbrennungskraftmaschine den zweiten Stoffstrom des Wärmeübertragers darstellt.

8. Antriebssystem nach Anspruch 6 oder 7, bei welchem der Kühlkreislauf dazu ausgelegt ist, Kühlmittel nach dem Prinzip eines Wärmerohrs und/oder eines Thermosiphons zu zirkulieren.

9. Luftfahrzeug (1) mit einem Antriebssystem nach einem der vorhergehenden Ansprüche.

10. Luftfahrzeug (1) nach Anspruch 9, bei welchem die Verbrennungskraftmaschine (13) und der Generator (15) im Rumpf (3) des Luftfahrzeugs (1) angeordnet sind.

11. Luftfahrzeug (1) nach Anspruch 9, bei welchem die Verbrennungskraftmaschine (13) und der Generator (15) in und/oder an einer vom Rumpf (3) oder einer Tragfläche (5) hervorragenden Gondel (7) des Luftfahrzeugs (1) angeordnet sind.

12. Luftfahrzeug (1) nach Anspruch 9, bei welchem die Verbrennungskraftmaschine (13) und der Generator (15) in und/oder an einer Tragfläche (5) des Luftfahrzeugs (1) angeordnet sind.

## Claims

1. Drive system for an aircraft (1), comprising
- an electrical generator (15),
- an internal combustion engine (13) with a gas expansion turbine (25),
- wherein the generator (15) has a rotor (17) mounted rotatably by means of a rotor shaft (21),
- wherein the gas expansion turbine (25) is mounted rotatably by means of a turbine shaft (23),
- wherein rotor shaft (21) and turbine shaft (23) are arranged so as to be couplable in torque-transmitting fashion such that the internal combustion engine (13) can deliver mechanical energy for the generator (15),
- wherein at least one component (17, 19) of the generator (15) is arranged at least partially in or at a supply air stream (33) of the internal combustion engine (13), **characterized in that** the component (17, 19) is the rotor (17) and/or a stator (19) of the electrical generator (15),
- and the supply air stream (33) of the internal combustion engine (13) is divided into multiple partial paths (37), and the rotor (17) and/or stator (19) is arranged at least partially in or at one of said partial paths (35a),
- and the partial paths (37) of the supply air stream (33) are formed as separate air channels (39) with separately controllable air streams (33).

2. Drive system according to Claim 1, which additionally comprises an electric motor (11) which can be supplied with electrical energy by the electrical generator (15), wherein the motor (11) is configured for driving the aircraft (1).

3. Drive system according to either of Claims 1 and 2, in which the generator (15) is configured for a nominal power of at least 1 megawatt.

4. Drive system according to one of the preceding claims, in which the rotor (17) and/or stator (19) is arranged at least partially in or at a main path (35) of the supply air stream (31) of the internal combustion engine (13).

5. Drive system according to one of the preceding claims, in which the generator (15) is cooled substantially by air.

6. Drive system according to one of Claims 1 to 4, in which the generator (15) has a cooling device which is configured for cooling the generator (15) with a fluid coolant, wherein the cooling device has a cooling circuit (43) for the circulation of the coolant, and at least a partial region of said cooling circuit is arranged in or at a partial path (37) of the supply air stream of the internal combustion engine.

7. Drive system according to Claim 6, in which the generator (15) has a heat exchanger (41) in which the coolant that is moved in the cooling circuit constitutes the first substance stream of the heat exchanger and a fraction of the supply air of the internal combustion engine constitutes the second substance stream of the heat exchanger.

8. Drive system according to Claim 6 or 7, in which the cooling circuit is configured to circulate coolant in accordance with the principle of a heat pipe and/or of a thermosiphon.

9. Aircraft (1) having a drive system according to one of the preceding claims.

10. Aircraft (1) according to Claim 9, in which the internal combustion engine (13) and the generator (15) are arranged in the fuselage (3) of the aircraft (1).

11. Aircraft (1) according to Claim 9, in which the internal combustion engine (13) and the generator (15) are arranged in and/or on a nacelle (7), which projects from the fuselage (3) or from a wing (5), of the aircraft (1).

12. Aircraft (1) according to Claim 9, in which the internal combustion engine (13) and the generator (15) are arranged in and/or on a wing (5) of the aircraft (1).

## Revendications

1. Système de propulsion d'un aéronef (1), comprenant
- une génératrice (15) électrique,
- une machine (13) à combustion interne, ayant une turbine (25) à détente de gaz,
- dans lequel la génératrice (15) a un rotor (17) monté tournant, au moyen d'un arbre (21) de rotor,
- dans lequel la turbine (25) à détente de gaz est montée tournante, au moyen d'un arbre (23) de turbine,
- dans lequel l'arbre (21) du rotor et l'arbre (23) de la turbine peuvent être accouplés à transmission de couple, de manière à ce que la machine (13) à combustion interne puisse fournir de l'énergie mécanique à la génératrice (15),
- dans lequel au moins une partie (17, 19) constitutive de la génératrice (15) est disposée, au moins en partie, dans ou sur un courant (33) d'entrée d'air de la machine (13) à combustion interne,
**caractérisé en ce que**
la partie (17, 19) constitutive et le rotor (17) et/ou un stator (19) de la génératrice (15) électrique,
- et le courant (33) d'entrée d'air de la machine (13) à combustion interne est subdivisé en plusieurs trajets (37) partiels et le rotor (17) et/ou le stator (19) est disposé, au moins en partie, dans ou sur l'un de ses trajets (35a) partiels,
- et les trajets (37) partiels du courant (33) d'entrée d'air sont constitués sous la forme de canaux (39) pour de l'air distincts à courants (33) pour de l'air pouvant être réglés séparément.

2. Système de propulsion suivant la revendication 1, qui comprend, en outre, un moteur (11) électrique, qui peut être alimenté en énergie électrique par la génératrice (15) électrique, le moteur (11) étant conçu pour la propulsion de l'aéronef (1).

3. Système de propulsion suivant l'une des revendications 1 ou 2, dans lequel la génératrice (15) est conçue pour une puissance nominale de moins de 1 mégawatt.

4. Système de propulsion suivant l'une des revendications précédentes, dans lequel le rotor (17) et/ou le stator (19) est disposé, au moins en partie, dans ou sur un trajet (35) principal du courant (31) d'entrée d'air de la machine (13) à combustion interne.

5. Système de propulsion suivant l'une des revendications précédentes, dans lequel la génératrice (15) est refroidie essentiellement par de l'air.

6. Système de propulsion suivant l'une des revendications 1 à 4, dans lequel la génératrice (15) a un dispositif de refroidissement conçu pour refroidir la génératrice (15) par un réfrigérant fluide, le dispositif de refroidissement ayant un circuit (43) de refroidissement pour faire circuler le réfrigérant et au moins une partie de ce circuit de refroidissement est disposée dans ou sur un trajet (37) partiel du courant d'entrée d'air de la machine à combustion interne.

7. Système de propulsion suivant la revendication 6, dans lequel la génératrice (15) a un échangeur de chaleur (41), dans lequel le réfrigérant, véhiculé dans le circuit de refroidissement, représente le premier courant de matière de l'échangeur de chaleur et une partie de l'air entrant dans la machine à combustion interne représente le deuxième courant de matière de l'échangeur de chaleur.

8. Système de propulsion suivant la revendication 6 ou 7, dans lequel le circuit de refroidissement est conçu pour faire circuler le réfrigérant suivant le principe d'un caloduc et/ou d'un thermosiphon.

9. Aéronef (1) ayant un système de propulsion suivant l'une des revendications précédentes.

10. Aéronef (1) suivant la revendication 9, dans lequel la machine (13) à combustion interne et la génératrice (15) sont disposées dans le fuselage (3) de l'aéronef (1).

11. Aéronef (1) suivant la revendication 9, dans lequel la machine (13) à combustion interne et la génératrice (15) sont disposées dans et/ou sur une nacelle (7) faisant saillie du fuselage (3) ou d'une aile (5) de l'aéronef (1).

12. Aéronef (1) suivant la revendication 9, dans lequel la machine (13) à combustion interne et la génératrice (15) sont disposées dans et/ou sur une aile (5) de l'aéronef (1).
